# EUROPEAN PATENT APPLICATION

(11) **EP 2 813 869 A1**
(43) Date of publication of application: **17.12.2014**
(21) Application number: 13172072.4
(22) Date of filing: 14.06.2013
(51) Int. Cl.: G01V 11/00, G01V 99/00

(54) **A system and a method for analyzing a mining environment**

(71) Applicant: Siemens Aktiengesellschaft, 80333 München (DE)
(72) Inventor: Das, Saptarshi, 560102 Bangalore (IN); Murugaiah, Thirumalai Kumar, 560099 Bangalore (IN)

(57) **Abstract**

A system (1) for analyzing a mining environment includes an storage (3) for storing a historical information (5) related to the mining environment and transferring the historical information (5) to a processor (4), a sensor for receiving a real-time information (6) from the mining environment and transferring the real-time information (6) to the processor (4), and the processor (4) for receiving the historical information (5) from the storage (3) and a real-time information (6) from the sensor (12), and processing the historical information (5) and the real-time information (6) to generate a three dimensional mesh (7) of finite elements (8) for a volume of the mining environment.

## Description

The invention relates to analysis of a mining environment. More particularly the invention relates to analysis of surface and/or sub-surface of a mining environment.

During mining operations, analysis of surface and underlying subsurface is one of the primary requirements. Such analysis is used to resolve various day-to-day tasks in the mining environment like continuous risk profiling of surfaces of a mining environment, mine planning and forecasting mine scenario, 3D volumetric visualization of mine surface and sub surface, management and tracking of mined materials, monitoring the filling up process, the material used for backfilling, resource monitoring, planning and efficient usage of resources, etc. Typically, each of these issues is analyzed and solved individually. Analysis carried out for one issue may not be useful for solving another issue. Therefore multiple analyses need to be carried out in parallel to solve individual issues. This leads to an inefficient process of analysis.

The object of the invention is to provide an efficient way for analyzing a mining environment.

The object is achieved by system of claim 1 and method of claim 9.

According to an embodiment of the system for analyzing a mining environment, the system includes a sensor, storage and a processor. The storage stores historical information related to the mining environment and transfers the historical information to a processor. The sensor receives real-time information from the mining environment and transfers the real-time information to the processor. The processor receives the historical information from the storage and real-time information from the sensor, processes the historical information and the real-time information, and generates a three dimensional mesh of finite elements for a volume of the mining environment. The processor further assigns the historical information and/or the real time information to the finite element. This helps to map the information in relation to the finite elements for analyzing the mining environment.

According to one embodiment of the system, at least one of the historical information and the real time information refers to significance of a fraction of the volume. The processor further generates on a basis of at least one of the historical information and the real time information, the finite elements of varying size ratio for the part of the three dimensional mesh of finite elements referring to the fraction of the volume, in comparison to remaining parts of the three dimensional mesh of finite elements referring to remaining volume. This helps for profiling of the surface and underlying subsurface of the mining environment on a basis of significance of a location of the mining environment.

According to one embodiment of the system, the processor determines risk of slope failure by processing finite elements of the three dimensional mesh according to stress/strain structural equilibrium between the finite elements. This helps for risk profiling of the surface and underlying subsurface of the mining environment.

According to an exemplary embodiment, the processor processes at least one of the finite element on a basis of the risk of slope failure to generate a set of finer elements in reference to the finite element. This provides for finer level analysis of the mining environment which may have risk of slope failure.

According to another embodiment of the system, the processor updates the three dimensional mesh of finite elements in real-time on the basis of at least one of the environmental information and the geometrical information received in real time at a time interval. This helps to analyze the mining environment in real time.

According to one embodiment of the system, the real-time information is related to a subsurface profile of the underlying subsurface. This helps to provide more accurate three dimensional mesh with the finite elements.

According to another embodiment of the system, the real-time information is based on electro-magnetism and the processor receives the real-time information from ground penetrating radar. This provides for one of the way to receive the real-time information related to a subsurface profile.

According to another embodiment of the system, the real-time information is based on acoustics and the processor receives the real-time information from an acoustic probe. This provides for one of the way to receive the real-time information related to a subsurface profile.
FIG 1 is a schematic illustration of a system for analyzing a surface of a mining environment.
FIG 2 illustrates a three dimensional mesh of finite elements for a volume of a surface and an underlying surface of a mining environment.

Hereinafter, various embodiments for carrying out the present invention are described in detail. The embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Prior to explaining functioning of system through various embodiments, some of the terminology used herein will be explained.

"Environment" is a geographical area where the excavations are to be performed and includes surface, subsurface, weather, etc. of the geographical area.

"Volume of the mining environment" includes surface, subsurface and empty space in the mining environment.

"Subsurface" is defined by the location below or behind the surface of the environment.

"Processor" is generally logic circuitry that responds to and processes the basic instructions for performing a function. It may be a central processing unit of a personal computer adapted to perform the function or microprocessors which are multipurpose, programmable devices that accepts data as input, processes it according to instructions stored in its memory, and provides results as output or any other computing device adapted to perform functions of the processor.

"Storage" is an electronic storing medium which stores computerized and/or electronic data. Some examples of storage are CD ROM, RAM, Hard Disk, USB device, electromagnetic storing medium, optical storing medium or any other storage medium capable of storing computerized and/or electronic data.

"Sensor" is a device which receives real-time information from the mining environment. The sensor may be an operational information detector receiving operational information of the mining environment, an image capturing device capturing real-time images of the mining environment, a ground penetrating radar or acoustic probe generating sub-surface profile or any such sensing device capturing real-time information from the mining environment.

"Historical information" is a computerized data and can be related to any of the following:
- Initial state of the mine: This may include geometry of sub surface and/or subsurface profile. The subsurface profile can contain information on the distribution of material type, water/moisture content etc. Such data are typically collected in the exploration phase and can be obtained readily from the mine supervisors. The subsurface profile can also be obtained from Ground penetrating radars (GPR) or signals from acoustic probing of the walls and base of the mine area can be obtained by mounting GPR and acoustic probing devices on the mining equipments like bucket wheel excavators, or trucks. Global Positioning System can be used in cases where the GPR is mounted onto vehicles like trucks.
- Historic information regarding weather, seismic activities: This includes historic information regarding rainfall, temperature, humidity, seismic activity records. This information can be obtained readily from the local geological stations.
- Information from bore holes: Information from bore holes like sub surface temperature at different levels, pressure, water content etc. can also be used in by the proposed systems.

"Real-time information" is a computerized data and can be related to any of the following:
- Operational information: Mine operation information from the mining instruments can also be used. This information includes position of reclaiming, rate of reclaiming, position of dumping, rate of dumping etc. This information can be obtained readily from the mining instruments and their setup.
- Real time weather information: This includes measured information regarding temperature, rainfall, humidity, seismic activity. Sensors for measuring all these parameters can be installed if not available. While the proposed system is running, it can accommodate any change in the moisture/water content in the whole mine (including sub surface blocks) due to rainfall, temperature from these real time inputs.
   Geometrical information related to geometry of surface of the mining environment. Geometry of the surface of the whole (or partial) mine area can be obtained by combining images from several 2D cameras placed at different locations in the mine. Cameras operating at more than one spectral range can also be used.
   Subsurface profile: This information can be obtained from Ground penetrating radars (GPR) or signals from acoustic probing of the walls and base of the mine area can be obtained by mounting GPR and acoustic probing devices on the mining equipments like bucket wheel excavators, or trucks. Subsurface profile can also be obtained from drill holes.

"Risk of slope failure" is a computerized data generated by the processor and relates to failure of a slope of the mining environment and may create hazard for life of workers working in the mining environment and other operational hazards.

"Three dimensional mesh" of "finite elements" and "finer elements": Three dimensional mesh is a collection of vertices, edges and faces that together formulates finite elements and defines partition of a fraction of a volume of the mining environment. The faces usually consist of triangles, quadrilaterals or other simple convex polygons, since this simplifies rendering, but may also be composed of more general concave polygons, or polygons with holes. The finer elements are further refined version of the finite elements to define a shape of fraction of the fraction of the volume of the mining environment.

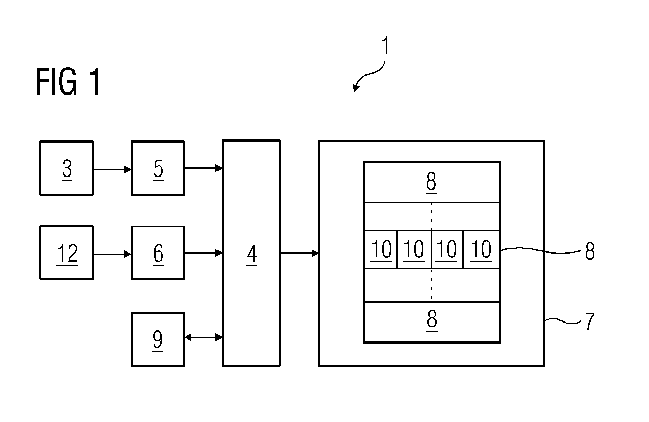

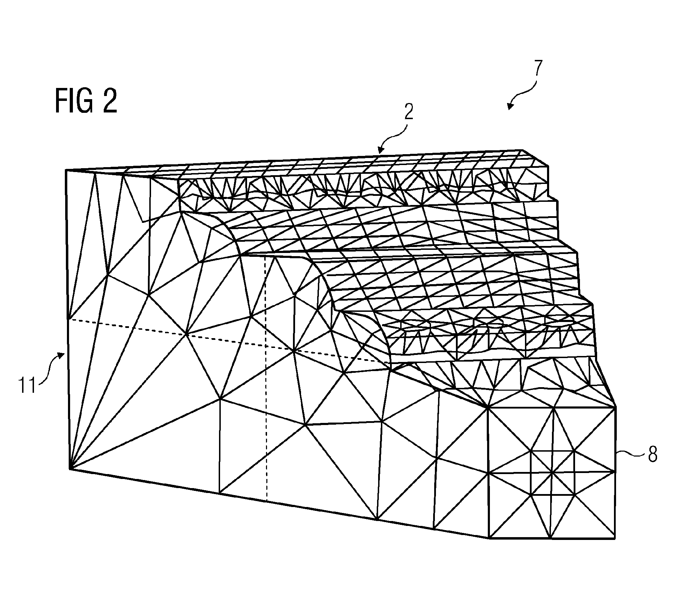

While discussing FIG 1 and FIG 2, references will be made to each other.

FIG 1 shows a schematic of a system 1 for analyzing a mining environment.

The system includes storage 3, a processor 4 and a sensor 12. The storage 3 stores historical information 5 related to the mining environment and transfers the historical information 5 to the processor 4. The sensor 12 captures real-time information 6 from the mining environment and transfers the real-time information 6 to the processor 4. In an alternate embodiment, the processor 4 receives the historical information 5 and the real-time information 6 via a data interface. The data interface can be coupled to the sensor 12, the storage 5 and the processor 4 through a data coupling.

The processor 4 receives and processes the historical information 5 and the real-time information 6 and generates a three dimensional mesh 7 of finite elements 8 for a volume of the mining environment. The volume may include surface, subsurface, or empty space of the mining environment or combination thereof.

In one embodiment, the processor 4 assigns the historical information 5 and/or the real time information 6 to the finite element 8. The processor 4 identifies different pieces of the historical information5 and/or the real time information 6 and maps them to various finite elements 8 on a basis of inter-relation between the finite elements and a fraction of the volume of the mining environment.

In an exemplary embodiment, at least the historical information 5 and the real-time information 6 refers to significance of at least a fraction of the volume of the mining environment and the processor 4 generates on a basis of the environmental information 5, the finite elements 8 of varying size ratio for a part of the three dimensional mesh 7 of finite elements referring to the fraction of the volume different from remaining parts of the three dimensional mesh 7 of finite elements 8. The significance refers to criticality and/or importance of a fraction of the volume. Variation in sizes is referred to as change in scale of the finite elements 8 in the fractions of the volume according to significance of the fractions for studying the mining environment especially in cases like material management, planning, monitoring, slope failure analysis, etc.

In one of the embodiment, the processor 4 determines risk of slope failure 9 by processing finite elements 8 of the three dimensional mesh 7 according to stress/strain structural equilibrium between the finite elements 8.

The processor 4 processes at least one of the finite element 8 on a basis of the risk of slope failure 9 to generate a set of finer elements 10 in reference to the finite element 8. Such finer elements 10 are desired specially in the cases where a user of the system may be having an apprehension of issues, or has a special interest with a part of the volume of the surface and/or the underlying subsurface 11. In general, if user doesn't have an apprehension of issues or special interest with any part of the volume of the surface 2 and the underlying subsurface 11, the processor need not process any of the finite elements 8 to generate the finer elements 10.

In another exemplary embodiment, the processor 4 updates the three dimensional mesh 7 of finite elements 8 in real-time on the basis of the real-time information 6 received in real time at a time interval, whether regular or irregular. This provides for continuous generation of the three dimensional mesh 7 and helps in monitoring, change in planning, continuous risk profiling, etc of the mining environment.

In an embodiment, the real-time information 6 can also be related to a subsurface profile of the underlying subsurface 11. The subsurface profile can be the physical properties like density of the subsurface, moisture content, temperature, etc.

In one embodiment, the real-time information 6 can be based on electro-magnetism and the processor 4 receives the real-time information 5 from ground penetrating radar 12.

In another embodiment, the real-time information 6 is based on acoustics and the processor 3 receives the real-time information 5 from an acoustic probe 12.

FIG 2 shows a three dimensional mesh 7 of irregular finite elements 8 for a volume of a surface 2 and/or an underlying surface 11 of a mining environment. The finite element 8 represents fractions of the volume of the surface 2 and/or the underlying surface 11 of a mining environment. Each of the finite elements 8 can store information like mineral content, waste material content, moisture, temperature, geometrical information about the volume in consideration at particular time, etc. In an alternate embodiment, the finite elements 8 can be of regular size to represent equal fractions of volume of the surface 2 and/or the underlying surface 11 under consideration.

Below an exemplary implementation of the invention is explained using various steps.

Step 1: At the very beginning, a 3D mesh is generated using a processor processing real-time information from a sensor and a historical information from a storage in order to cover the whole volume of the mining environment into finite elements. Depending on significance referred by at least one of the historical information and the real time information, any fraction of the volume, the processor generate finite elements of different sizes for different fractions of the volume.

Step 2: All the contents regarding the historical information are populated in the finite element model by the processor. These can contain information regarding material, moisture/water content over the whole mining area, including the available subsurface information. Depending on the information reliability, a credibility index for each of the parameters can also be stored in the finite element by the processor. The last measurement date and/or time can also be stored in each of the finite element by the processor.

Step 3: A stress/strain structural equilibrium problem is further solved, and risk of slope failure is estimated by the processor. This information is populated to all the finite elements. In reference to risk of slope failure, the mesh can be refined for the finite elements with the finer elements. Specifically some high risk area can be identified by a selection input from a user to select specific fractions of on a basis of the risk of slope failure, and the finer elements are generated by the processor using the selection input for specific finite elements referring to the selected fractions.

Step 4: Real-time information which is received at time intervals is used to update the finite element model by the processor. The material content at the finite element corresponding to the reclaimed location are set to zero, if real-time information is related to operational information of mining. The dumping location is also updated. The management and tracking log of the mine is updated.

Step 5: 3D images obtained at particular time interval are used to update and correct the model by the processor, if necessary.

Step 6: If Real-time information is sub surface profile information regarding the GPR or acoustic probing using instruments mounted typical mining machines (like reclaimer), such real-time information is used to update the corresponding finite elements by the processor. Information regarding material type, moisture type etc. is updated in the finite elements corresponding to the probed locations. The time stamp of the measurement and the credibility of the information can also be stored. If required the mesh size is adapted.

Step 7: If historical information is related to Weather (rainfall, temperature) and seismic activity related information, than the historical information are used to update the sub surface information on the finite elements corresponding to the location where GPR or acoustic probing was not done in step 6. Most of the time, this is the major part of the location. Interpolation and simulation techniques can be used at this stage. The simulation techniques are based on physical principles, like rate of evaporation form the surface, capillary effect in the sub surface on the type of material present there. If required the mesh size is adapted.

Step 8: Sub-surface information from boreholes like temperature, moisture/water content can be used to update the finite elements corresponding to the location of measurement by the processor. Since these information are more precise than the simulated ones, these information can be used to update or calibrate the simulation as well.

Step 9: the system again starts with step 3.

The step 3 to step 8 should not follow any particular order. Some of the steps can even be done in parallel or some of the steps can even be skipped if corresponding source of information is not available.

The real-time information like the borehole information can also be used by the processor to generate the dispersion and gradient of physical quantities like temperature, moisture etc. These dispersion and gradient information can be used to perform more realistic simulations and interpolations.

The mining environment simulations can also be performed using the system of the invention. The Step 1, step 2 and step 3 can be done as usual. In the step 4, in spite of using real-time information, the system uses a user input related to mining operation strategy. Further step 7 is performed by the system using the historic information. This can result into desired simulations.

## Claims

1. A system (1) for analyzing a mining environment comprising:
- a storage (3) adapted to store a historical information (5) related to the mining environment and to transfer the historical information (5) to a processor (4),
- a sensor adapted to detect a real-time information (6) from the mining environment and to transfer the real-time information (6) to the processor (4),
- the processor (4) adapted to receive the historical information (5) from the storage (3) and a real-time information (6) from the sensor (12), and to process the historical information (5) and the real-time information (6) to generate a three dimensional mesh (7) of finite elements (8) for a volume of the mining environment.

2. The system (1) according to claim 1, wherein the processor (4) is adapted to assign the historical information (5) and/or the real time information (6) to the finite element (8).

3. The system (1) according to any of the claims 1 or 2, wherein at least one of the historical information (5) and the real time information (6) refers to significance of at least a fraction of the volume of the mining environment, wherein the processor (4) is adapted to generate on a basis of at least one of the historical information (5) and the real-time information (6), the finite elements (8) of varying sizes for a part of the three dimensional mesh (7) of finite elements different from remaining parts of the three dimensional mesh (7) of finite elements (8).

4. The system (1) according to any of the claims 1 to 3, wherein the processor (4) is adapted to determine risk of slope failure (9) by processing finite elements (8) of the three dimensional mesh (7) according to stress/strain structural equilibrium between the finite elements (8).

5. The system (1) according to any of the claims 1 to 4, wherein the processor (4) is adapted to process at least one of the finite element (8) on a basis of the slope failure risk information (9) to generate a set of finer elements (10) in reference to the finite element (8).

6. The system (1) according to any of the claims 1 to 5, wherein the processor (4) is adapted to update the three dimensional mesh (7) of finite elements (8) in real-time on the basis of the real-time information (6) received at a time interval.

7. The system (1) according to any of the claims 1 to 6, wherein the real-time information (6) is related to subsurface profile of the underlying subsurface (11) of the surface (2).

8. The system (1) according to claim 7, wherein the real-time information (5) is based on electro-magnetism and the processor (4) is adapted to receive the real-time information (6) from ground penetrating radar (12).

9. The system (1) according to the claim 7, wherein the real-time information (6) is based on acoustics and the processor (4) is adapted to receive the real-time information (6) from an acoustic probe (12).

10. A method for analyzing a mining environment comprising:
- receiving historical information (5) related to the mining environment by a processor (4) from storage (3),
- receiving a real-time information (6) of the mining environment by the processor (4) from a sensor (12),
- processing the historical information (5) and the real-time information (6) by the processor (4) to generate a three dimensional mesh (7) of finite elements (8) for a volume of the mining environment.

11. The method according to the claim 10 comprising:
- assigning the historical information (5) and/or the real time information (6) to the finite element (8) by the processor (4).

12. The method according to any of the claims 10 or 11, wherein at least the historical information (5) and the real-time information (6) refers to significance of at least a fraction of the part of the surface (2) and/or the underlying subsurface (11), the method further comprising:
- generating the finite elements (8) of varying sizes for a part of the three dimensional mesh (7) of finite elements different from remaining parts of the three dimensional mesh (7) of finite elements (8) by the processor (4) on a basis of at least the historical information (5) and the real-time information (6).

13. The method according to any of the claims 10 to 12 comprises:
- determining risk of slope failure (9) by the processor (4) by processing finite elements (8) of the three dimensional mesh (7) according to stress/strain structural equilibrium between the finite elements (8).

14. The method according to any of the claims 9 to 13 comprises:
- processing at least one of the finite element (8) on a basis of the risk of slope failure (9) to generate a set of finer elements (10) in reference to the finite element (8) by the processor (4).

15. The method according to any of the claims 9 to 14 comprises:
- updating the three dimensional mesh (7) of finite elements (8) by the processor (4) in real-time on the basis of the real-time information (6) received in real time at a time interval.
